# DEMANDE DE BREVET EUROPEEN

(11) **EP 1 320 046 A1**
(43) Date de publication de la demande: **18.06.2003**
(21) Numéro de dépôt: 02356228.3
(22) Date de dépôt: 14.11.2002
(51) Int. Cl.: G06F 17/30

(54) **Procédé pour l'accès à des informations disponibles sur un réseau**

(30) Priorité: 14.11.2001 FR 0114743
(71) Demandeur: Eolys, 69003 Lyon (FR)
(72) Inventeur: Menard, M. Jean-Louis, 69001 Lyon (FR)
(74) Mandataire: Bratel, Gérard

(57) **Abrégé**

Le procédé facilite l'accès à des informations (INF) disponibles sur un réseau (10) du genre Internet ou Intranet.

Un marquage (2, 3), apposé sur un document ou un objet (4), contient un code (DES) correspondant à une séquence de lettres, chiffres et/ou signes, nécessaire pour accéder à une information (INF) déterminée, disponible sur le réseau (10). Le contenu du marquage (2, 3) est lu et décodé, par un dispositif (5) mis à disposition de l'utilisateur, ce dispositif (5) émettant un signal (S) pour rechercher l'information (INF) concernée. En réponse à la réception de ce signal (S), un terminal (8) tel que micro-ordinateur recherche et obtient l'information (INF) sur le réseau (10). L'accès à l'information (INF) peut être libre, ou limité, et impliquer ou non l'identification de l'utilisateur.

Applications individuelles et professionnelles.

## Description

La présente invention concerne un procédé qui permet d'accéder à des informations disponibles sur un réseau du genre Internet ou Intranet.

Pour accéder à de telles informations, l'on se réfère actuellement le plus souvent à un support écrit traditionnel, sur lequel sont mentionnées les informations accessibles par le réseau. Il s'agit, par exemple :
- d'un objet mentionné dans un magazine, et que l'on peut acheter sur le réseau Internet,
- du site d'un pays ou d'une région, signalé dans la brochure d'un voyagiste,
- d'une promotion spéciale destinée aux clients fidèles, sur un catalogue de vente par correspondance,
- de données professionnelles signalées sur divers documents,
- d'une documentation technique mentionnée sur une publicité ou sur un mode d'emploi,
- d'un document présentant une note de service diffusée au sein d'une entreprise,
- de l'accès à un formulaire signalé sur un document administratif.

En l'état actuel, pour parvenir au site contenant les informations recherchées, on doit taper très précisément des lettres, chiffres, espaces et autres signes divers. Ceci s'effectue avec des risques d'erreur, en demandant un temps plus ou moins important, et le plus souvent sans accéder directement à l'information elle-même, mais plutôt en parvenant à un espace dans lequel il faut encore opérer des choix. A titre d'exemple concret de la complexité d'une telle procédure, on peut considérer l'accès à un horaire de train, sur le site d'une compagnie de chemin de fer : Une première solution consiste ici à aller sur le site "voyage-sncf.com" puis à sélectionner sur la page d'accueil "Les horaires" ; si l'on voulait accéder directement à cette page "Les horaires", une autre solution consisterait à taper la séquence de lettres, chiffres et signes suivants : "http://www.voyages-
sncf.com/dynamic/_SvTermConshor5?_TMS=1005153654199&_DLG=
SvTermConshor5&_LANG=FR&_AGENCY=VSC".

De plus, dans un tel processus connu d'accès à des informations :
- ou bien l'appelant n'a pas à s'identifier, auquel cas on ne dispose d'aucune information le concernant, ceci interdisant aussi de limiter l'accès aux informations à certaines catégories d'utilisateurs ;
- ou bien il convient d'utiliser un code d'accès et/ou un "mot de passe", ce qui permet d'identifier l'utilisateur, mais dans ce cas l'accès aux informations est limité à des personnes limitativement et individuellement désignées à l'avance.

La présente invention vise à supprimer les inconvénients et/ou limitations des procédures habituelles d'accès à des informations sur un réseau, par une solution particulièrement simple et polyvalente, rendant cet accès plus direct, plus fiable et plus rapide tout en permettant éventuellement une identification de l'utilisateur ou du moins de la catégorie à laquelle appartient cet utilisateur, et en offrant aussi des possibilités de limitation d'accès.

A cet effet, l'invention a pour objet un procédé pour l'accès à des informations disponibles sur un réseau du genre Internet ou Intranet, le procédé consistant essentiellement :
- à créer, et mettre à disposition de l'utilisateur, au moins un marquage apposé sur un document ou sur un objet, le marquage contenant au moins un code correspondant à une séquence de lettres, chiffres et/ou signes, nécessaire pour accéder à une information déterminée, disponible sur le réseau ;
- à lire et décoder le contenu du marquage précité, par des moyens de lecture et de décodage ;
- à émettre, à partir de ces moyens, un signal pour rechercher l'information concernée sur le réseau, ledit signal correspondant à la même séquence de lettres, chiffres et/ou signes ; et
- en réponse à la réception de ce signal, à rechercher et obtenir l'information sur le réseau.

Ainsi, le procédé objet de l'invention a pour point de départ un marquage, du genre "timbre" ou "vignette", apposé dans un espace défini sur un support en papier, tel que magazine ou notice ou autre type de document, ou encore sur un objet ou un appareil. Le marquage contient un ou des codes, qui identifient l'information correspondante, et qui peuvent être lus et compris par les moyens adaptés de lecture et de décodage, utilisés en combinaison avec ce marquage, lesdits moyens pouvant se présenter comme un crayon lecteur, facilement tenu à la main. Ces moyens, ayant identifié l'information recherchée, émettent un signal vers un terminal tel que micro-ordinateur, capable de recevoir le signal et d'aller rechercher l'information, de façon connue en soi, sur le réseau. Le principe de l'invention impliquant la lecture d'au moins un marquage pour accéder à une information, il est aussi envisageable qu'au moins deux marquages distincts et complémentaires doivent être lus et combinés, pour accéder à une informatioin particulière.

Le procédé de l'invention combine ainsi des moyens élémentaires simples et peu encombrants, utilisés avec un micro-ordinateur ou autre terminal existant, pour donner directement accès à une information, en particulier sans nécessité de composer manuellement, sur clavier, un ensemble de lettres, chiffres, espaces et/ou signes divers. La lecture du marquage, tel que "code-barre", ou code selon la technologie "DATA MATRIX", s'effectue de façon automatique, par un procédé optique, magnétique, électromagnétique ou autre, selon le type de marquage prévu, et le décodage de ce marquage s'effectue selon une technique connue, en fonction du type de codage retenu. Les moyens de lecture et de décodage assurent eux-mêmes, notamment par une transmission sans fil du genre radio ou infra-rouge, l'émission de leur signal vers le micro-ordinateur, ce signal étant composé de la séquence de lettres, chiffres, espaces et autres signes correspondant à ceux que l'utilisateur taperait traditionnellement sur un clavier. Le micro-ordinateur, recevant ce signal, va rechercher automatiquement l'information sur le réseau, et pourra afficher lui-même cette information, sur son écran.

Dans le mode de mise en oeuvre le plus simple du procédé, objet de l'invention, le marquage contient uniquement le code d'identification de l'information correspondante, et les moyens de lecture et de décodage ne font que lire et décoder le contenu du marquage, pour émettre dans tous les cas, et sans sélection, le signal pour rechercher cette information. Ainsi, l'accès à l'information n'est pas limité (toute personne disposant du marquage pouvant accéder à l'information, sans sélection possible), l'utilisateur n'est pas identifiable, et l'information n'est pas adaptable à cet utilisateur, ce qui rend le procédé universel dans son utilisation.

Dans une forme de mise en oeuvre plus élaborée du procédé, objet de l'invention, il est prévu que :
- des spécificités complémentaires sont incluses dans le marquage, sous forme codée ;
- lesdites spécificités complémentaires sont aussi lues et décodées par les moyens de lecture et de décodage ; et
- soit les spécificités complémentaires sont corrélées, par les moyens de lecture et de décodage eux-mêmes, à des instructions préalablement enregistrées dans ces moyens, de manière que ceux-ci autorisent ou interdisent, selon la corrélation constatée, l'émission du signal pour rechercher l'information ;
- soit les spécificités complémentaires sont transmises par les moyens de lecture et de décodage avec le signal pour rechercher l'information, auquel cas la corrélation est effectuée par les moyens, tels que micro-ordinateur, recevant ledit signal et allant rechercher l'information sur le réseau.

Dans ce mode de mise en oeuvre plus élaboré, il existe en quelque sorte une interaction complémentaire entre le marquage d'une part, et les moyens de lecture et de décodage d'autre part, pour donner un accès sélectif à l'information, ou pour traiter et adapter cette information, ou encore pour ajouter des informations supplémentaires. On notera aussi que le mode de traitement des spécificités complémentaires peut prendre deux formes : soit ces spécificités complémentaires, lues sur le marquage et décodées par les moyens de lecture et de décodage, sont analysées par ces moyens eux-mêmes, par corrélation avec des instructions pré-enregistrées, pour donner des autorisations ou des interdictions d'émission du signal pour rechercher l'information ; soit les spécificités complémentaires sont encore lues et décodées, mais ne donnent lieu à aucun traitement complémentaire au niveau des moyens de lecture et de décodage, et sont retransmises telles quelles vers le micro-ordinateur, ce dernier assurant alors leur interprétation.

A titre d'exemples non limitatifs de spécificités complémentaires, incluses dans le marquage, et impliquant une analyse par les moyens de lecture et de décodage eux-mêmes, on peut envisager :
- une spécificité "image" : Le marquage contient sous forme codée une image, ou un signe distinctif analogue, et les moyens de lecture et de décodage renferment des instructions de reconnaissance de cette image, de sorte que le signal donnant ordre de rechercher l'information n'est émis que si l'image est reconnue. Par exemple, cette image est le logotype d'une entreprise, et seule une personne possédant des moyens de lecture et de décodage possédant la même image en instructions, donc une personne liée à l'entreprise, pourra accéder à l'information recherchée ;
- une spécificité "date" : Le signal pour rechercher l'information n'est pas émis avant la date pré-enregistrée, ou au-delà de cette date. Par exemple, une telle spécificité permet de faire bénéficier l'utilisateur d'une offre promotionnelle seulement dans une période limitée, ou de rechercher des informations, telles que des horaires de trains, dépendantes de la date ;
- une spécificité "âge" : Le signal pour rechercher l'information est émis seulement si les moyens de lecture et de décodage contiennent une instruction mentionnant à quelle tranche d'âge appartient leur possesseur. Ceci permet, par exemple, de limiter l'accès à une certaine information à un public majeur autorisé ;
- une spécificité de "personnalisation" : Le signal pour rechercher l'information est émis seulement si les moyens de lecture et de décodage contiennent une instruction identifiant entièrement un utilisateur. Par exemple, si la spécificité est le fait d'être client d'une entreprise, les moyens de lecture et de décodage contiennent, comme instruction, un code ou un numéro de client correspondant. De manière similaire, si la spécificité est le fait d'être un salarié, nommément désigné, d'une entreprise, les moyens de lecture et de décodage doivent contenir, comme instructions, le numéro de référence dudit salarié et aussi l'identification de l'entreprise, par exemple son logotype.
- une spécificité "profil utilisateur" : Le signal pour rechercher l'information sera dans ce cas émis, accompagné des caractéristiques descriptives du possesseur des moyens de lecture et de décodage. Lesdites caractéristiques sont pré-enregistrées dans ces moyens, et elles peuvent donc être envoyées avec le signal. Ces caractéristiques peuvent être par exemple l'âge, le sexe, le statut socio-professionnel, l'adresse postale ou électronique, le numéro de téléphone, etc., de l'utilisateur.
- une spécificité "liaison entre plusieurs marquages" : Le signal pour rechercher l'information assemble les codes d'accès de l'information à rechercher sur le réseau contenus dans plusieurs marquages différents, et ce dans l'ordre indiqué par la spécificité contenue dans lesdits marquages. Cela permet d'accéder à une information plus ou moins précise selon que l'on utilise un seul ou plusieurs marquages. Par exemple une telle spécificité permet d'accéder à un dossier d'inscription à l'Université par la lecture d'un premier marquage, ou à un dossier d'inscription spécifiquement en année de thèse par la lecture d'un second marquage en liaison avec le précédent ou encore plus précisément à un dossier d'inscription pré-rempli pour un étudiant déterminé par la lecture d'un marquage le concernant, là encore en liaison avec le premier marquage. Tous ces différents marquages sont donc en liaison les uns des autres grâce à la spécificité "liaison entre plusieurs marquages" inscrite en code sur chacun desdits marquages.
- une spécificité "langue" : Elle définit des langues à privilégier, en fonction de l'interlocuteur visé. Par exemple, dans le cadre d'une campagne publicitaire faite à l'échelle internationale, dans différents magazines, chaque lecteur peut ainsi accéder à une information fournie dans sa langue préférentielle, elle-même pré-enregistrée dans les moyens de lecture et de décodage.

Dans les divers exemples précédents, une corrélation est établie entre les spécificités complémentaires, incluses dans le marquage, et les instructions (simples ou combinées) pré-enregistrées dans les moyens de lecture et de décodage. A titre d'exemples non limitatifs de spécificités complémentaires, toujours portées par le marquage mais n'impliquant pas la mise en oeuvre d'une fonction d'analyse de ces spécificités par les moyens de lecture et de décodage, peuvent être envisagés entre autres :
- une spécificité "éditeur" : II s'agit d'une référence complémentaire, qui est lue et retransmise automatiquement, et qui permet d'identifier le support du marquage utilisé. Cette spécificité complémentaire permet, par exemple, d'identifier le magazine sur lequel l'utilisateur a lu le marquage, et par là de déterminer le taux de réaction à des publicités, selon leur support ;
- une spécificité "accès protégé" : Le signal pour rechercher l'information est émis, mais l'accès à cette information sur le micro-ordinateur nécessite l'entrée d'un code d'identification sur ce micro-ordinateur, par l'utilisateur. Une telle spécificité permet, par exemple, de limiter l'accès à des informations professionnelles ou bancaires, dans des cas où l'on veut être certain que l'utilisateur des moyens de lecture et de décodage est bien le possesseur (identifié par son code) desdits moyens ;
- une spécificité "message" : Dans le cas de moyens de lecture et de décodage complétés par des moyens d'affichage, tels qu'un petit écran, et lorsque ces moyens stockent aussi plusieurs informations, l'utilisateur peut identifier clairement quelle information il va rechercher, en émettant le signal de recherche correspondant. Par exemple, l'utilisateur peut ainsi reprendre une donnée entrée la veille sur ses moyens de lecture et de décodage. L'affichage du message correspondant, tel que "Grèce spécial mai", lui rappelle que c'est bien à cette information qu'il veut accéder, et non pas à une autre information, telle que "Une semaine thalasso", également stockée sur les mêmes moyens de lecture et de décodage.

L'invention a aussi pour objet un matériel spécifiquement conçu pour la mise en oeuvre du procédé, ci-dessus défini, pour l'accès à des informations disponibles sur un réseau. Ce matériel se compose, essentiellement :
- de supports tels que documents ou objets, ou leurs emballages, portant chacun au moins un marquage contenant au moins un code nécessaire pour accéder à une information déterminée, disponible sur le réseau ;
- un dispositif de lecture et de décodage, avec moyens de lecture d'un marquage, moyens de décodage du marquage lu, et moyens d'émission d'un signal pour rechercher l'information concernée ; et
- un terminal tel que micro-ordinateur, équipé de moyens de réception du signal précité, ce terminal étant raccordé ou raccordable au réseau, et étant prévu pour rechercher et obtenir l'information sur le réseau.

Un élément essentiel et spécifique de ce matériel pour l'accès à des informations disponibles sur un réseau est ainsi le dispositif de lecture et de décodage des marquages. Il s'agit d'un dispositif électronique, ou opto-électronique, de préférence portable, par exemple d'une taille comparable à celle d'un briquet jetable ou d'un paquet de cigarettes, ce qui lui permet d'être facilement tenu à la main par son utilisateur.

Ce dispositif de lecture et de décodage des marquages peut être totalement autonome. Il peut aussi être conçu comme partie intégrante d'un autre appareil, tel qu'un téléphone mobile ou un assistant personnel, (aussi désigné comme "organisateur") et/ou être en relation avec un tel appareil, de manière à profiter des fonctions de cet autre appareil.

Comme il résulte déjà de ce qui précède, le dispositif de lecture et de décodage des marquages peut, dans une forme de réalisation particulière, possèder des moyens d'affichage, tels qu'un petit écran, qui permettent de visualiser des éléments d'un marquage, en particulier le code d'un marquage, ou d'autres éléments d'information pouvant faciliter l'utilisation du matériel en question.

Selon une autre caractéristique avantageuse, le dispositif de lecture et de décodage des marquages inclut encore des moyens de stockage de données, permettant de mémoriser l'équivalent de plusieurs marquages lus, et/ou des instructions (au sens précédemment défini, c'est-à-dire des données à corréler avec des spécificités complémentaires incluses dans les marquages), et/ou d'autres données à caractère permanent ou temporaire, enregistrées à l'initiative de l'utilisateur ou du constructeur du dispositif. Dans ce dernier cas, le dispositif de lecture et de décodage des marquages inclut encore des moyens d'analyse de corrélation, pour corréler des spécificités complémentaires lues à des instructions pré-enregistrées dans les moyens de stockage du même dispositif. Ainsi, le dispositif peut être personnalisé aux caractéristiques personnelles de son utilisateur (identification, mémorisation des sites préférés), ou du moins rattacher l'utilisateur à un groupe d'appartenance (personnel d'une entreprise, clientèle d'une entreprise, ordre professionnel, association, etc...), ceci d'une manière permanente ou temporaire, par exemple avec limitation à une période donnée, telle que l'échéance de droits d'adhésion, ou limitation à une certain nombre d'usages, éventuellement avec possibilité de "rechargement" par la voie téléphonique.

Selon un mode de réalisation particulier, le dispositif de lecture et de décodage des marquages peut être couplé à un socle support, sur lequel ce dispositif peut être posé et rechargé en énergie et/ou chargé en instructions (au sens précédemment défini). Outre ses moyens de tenue mécanique du dispositif de lecture et de décodage, et de liaison électrique avec ce dispositif, le socle support est avantageusement pourvu de touches alphanumériques, afin de charger des instructions à transmettre au dispositif de lecture et de décodage des marquages.

En complément, le dispositif de lecture et de décodage des marquages est, lui-même, doté de touches de commande de fonctions, telles que des touches :
- pour la mise en marche et à l'arrêt du dispositif,
- pour émettre le signal pour rechercher l'information,
- pour introduire un code d'accès,
- pour faire défiler des informations sur l'écran, si le dispositif est pourvu d'un écran,
- etc...
ces touches devant rester en nombre limité, et ne pas remettre en cause la dimension globalement réduite du dispositif.

Le dispositif de lecture et de décodage des marquages peut encore être doté d'une fente pour introduction et lecture d'une carte magnétique ou carte à puce, contenant par exemple des instructions à pré-enregistrer dans ce dispositif.

Enfin, bien que le dispositif de lecture et de décodage des marquages possède principalement une fonction d'émission d'un signal pour rechercher l'information, ce dispositif peut encore comporter des moyens de réception de signaux, lui permettant notamment :
- de recevoir des signaux émis par un autre dispositif de même type, ceci permettant de transmettre le contenu d'un marquage de dispositif en dispositif, dans des conditions équivalentes à une lecture directe du marquage sur son support (papier ou objet) ;
- de recevoir un signal en provenance d'une autre source, émettant l'équivalent "électronique" d'un marquage sur un papier ou un objet, cette source pouvant être située, par exemple, sur un panneau d'affichage, un catalogue, une machine ou un appareil quelconque, etc...

Quant au terminal tel que micro-ordinateur, recevant le signal émis par le dispositif de lecture et de décodage des marquages, celui-ci peut être préconditionné ou non pour interpréter ledit signal, reçu par une liaison filaire ou non filaire, et procéder alors à la recherche et à l'obtention de l'information sur le réseau. Si ces fonctions ne sont pas prévues à l'origine par le constructeur, l'adjonction d'un logiciel approprié permet au micro-ordinateur d'accéder directement au réseau, puis à l'information recherchée, dès que le signal émis par le dispositif de lecture et de décodage des marquages a été reçu par le micro-ordinateur. Enfin, le micro-ordinateur peut être doté, sur son clavier ou sa souris ou tout autre périphérique, d'une touche spécifique commandant la liaison entre le dispositif de lecture et de décodage des marquages et le micro-ordinateur, et entre ce micro-ordinateur et le réseau.

Le terminal peut aussi être un téléphone, tel qu'un téléphone mobile, avec accès au réseau Internet (par exemple un téléphone de technologie UMTS). Dans ce cas, soit le dispositif de lecture et de décodage fait partie intégrante dudit téléphone, lequel possède de ce fait les fonctions de ce dispositif, le signal émis étant directement connecté au téléphone pour accéder au réseau Internet, soit le dispositif en question est autonome, auquel cas le téléphone est assimilable à tout autre type de terminal.

L'invention sera de toute façon mieux comprise à l'aide de la description qui suit, en référence au dessin schématique annexé illustrant, à titre d'exemples, des versions plus ou moins élaborées de ce procédé pour l'accès à des informations disponibles sur un réseau, et représentant un matériel pour la mise en oeuvre de ce procédé.
Figure 1 est un schéma illustrant une version élémentaire du procédé, objet de l'invention ;
Figure 2 est un schéma analogue au précédent, mais illustrant une version plus élaborée de ce procédé ;
Figure 3 est un organigramme illustrant un aspect du procédé de de la figure 2 ;
Figure 4 représente, schématiquement, le dispositif de lecture et de décodage des marquages, et son socle support, dans un mode de réalisation particulier ;
Figure 5 représente, vu sous un autre angle, le dispositif de lecture et de décodage de la figure 4.

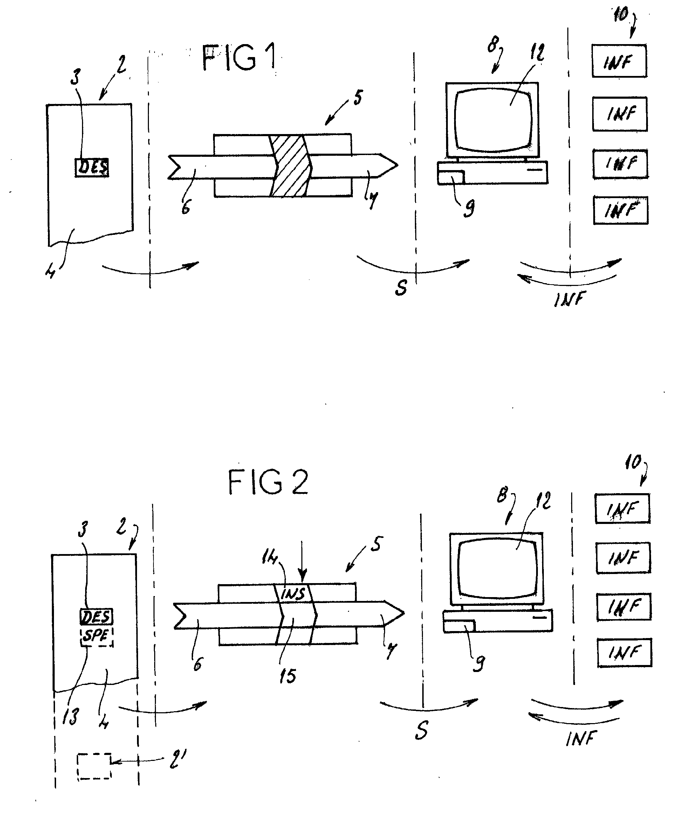

La figure 1 représente, de façon symbolique, les composants principaux d'un matériel conforme à l'invention, qui sont :
- un marquage 2, se présentant comme un timbre ou une vignette 3, apposé sur un document ou sur un objet 4 ;
- un dispositif 5 de lecture et de décodage, alimenté en énergie notamment de façon autonome par une pile, et incluant une fonction 6 de lecture et de décodage proprement dits, et une fonction 7 d'émission d'un signal S ;
- un terminal 8, en particulier un micro-ordinateur, pourvu d'une fonction 9 de réception du signal S ;
- un réseau 10 du genre Internet ou Intranet, auquel est raccordé ou raccordable le terminal 8.

Le marquage 2 contient, sous une forme codée DES, la description de l'accès à une information INF disponible sur le réseau 10. Le processus élémentaire d'accès à l'information INF, illustré par la figure 1, est le suivant :
- Par sa fonction 6, le dispositif 5 lit et décode le marquage 2, ceci s'effectuant notamment en "balayant" le timbre 3 du marquage 2 à l'aide du dispositif 5, pour assurer la lecture complète du code DES.
- Puis, par sa fonction 7, le même dispositif 5 émet le signal S, pour rechercher l'information concernée.
- Par sa fonction 9, le terminal 8 reçoit le signal S, et interprète ce signal S.
- Le terminal 8 va alors rechercher l'information INF (correspondant au marquage 2 lu) sur le réseau 10, et il obtient en retour cette information INF qui peut notamment s'afficher sur son écran 12.

Dans ce processus élémentaire, il n'existe aucune limitation d'accès à l'information INF (pour l'utilisateur disposant d'un matériel adéquat), et aucune adaptation de cette information INF.

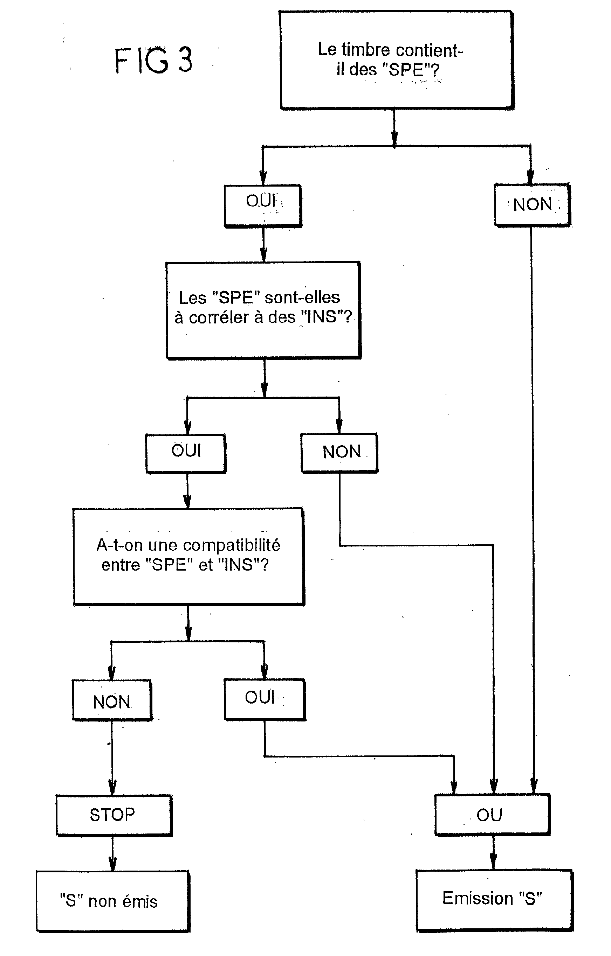

Les figures 2 et 3 illustrent une version plus élaborée, les éléments correspondants y étant désignés par les mêmes repères que sur la figure 1.

Le marquage 2, toujours sous forme de timbre ou de vignette 3 apposé sur un document ou objet 4, inclut ici sous forme codée, dans une zone particulière 13, des spécificités complémentaires SPE, s'ajoutant au code de base DES.

Le dispositif 5 de lecture et de décodage comporte, outre sa fonction 6 de lecture et de décodage et sa fonction 7 d'émission de signal, une fonction 14 de mémorisation d'instructions INS et une fonction supplémentaire 15 d'analyse de corrélation. Des instructions INS, correspondant à certaines spécificités complémentaires SPE, sont ainsi pré-enregistrées dans le dispositif 5 de lecture et de décodage.

Lors de l'utilisation de l'ensemble, le dispositif 5 lit et décode sur le marquage 2, d'une part, le code DES d'accès à l'information, et d'autre part, la ou les spécificités complémentaires SPE codées en 13. La fonction 15 de ce dispositif 5 analyse la corrélation entre ces spécificités complémentaires SPE et les instructions INS pré-enregistrées en 14. En cas d'adéquation entre les spécificités complémentaires SPE et lesdites instructions INS, le dispositif 5 émet, par sa fonction 7, le signal S pour rechercher l'information. Comme dans le processus élémentaire, précédemment décrit, le terminal 8 reçoit le signal S et, en réponse, il va rechercher sur le réseau 10, et obtenir en retour, l'information INF désirée.

A l'inverse, si les spécificités SPE du marquage 2 ne peuvent être corrélées à des instructions INS pré-enregistrées dans le dispositif 5 de lecture et de décodage, la fonction d'émission 7 de ce dispositif 5 est rendue inopérante, autrement dit aucun signal S n'est émis, donc reçu par le terminal 8, si bien que l'utilisateur n'aura pas accès à l'information INF demandée.

Ce fonctionnement, avec activation ou non de la fonction 7 d'émission du signal S pour rechercher l'information, est résumé par l'organigramme de la figure 3 (qui inclut aussi le cas élémentaire d'un marquage 2 sans spécificités complémentaires).

Bien que le principe de base de l'invention, tel que décrit jusqu'ici, implique un marquage 2 unique donnant accès à une information INF, le système peut nécessiter la lecture et le décodage de deux ou plusieurs marquages complémentaires, tels qu'un premier marquage 2 et un second marquage 2' (voir figure 2), à combiner l'un avec l'autre pour constituer et interpréter un message plus complet, appelant une information INF plus précise. Les deux marquages 2 et 2' peuvent être portés par un même document ou objet 4, ou par des documents ou objets distincts. Ces marquages 2 et 2' contiennent alors une spécificité SPE de "liaison entre plusieurs marquages", qui permet au dispositif 5 de comprendre leur lien entre eux ainsi que l'ordre des séquences à décoder sur les marquages en question. On notera que, dans ce cas, le dispositif 5 possède, parmi les instructions INS pré-enregistrées, l'instruction particulière d'avoir lu et pu combiner deux marquages 2 et 2', avant de commander l'émission du signal S.

Par exemple, dans le cadre d'une étude médicale, le dispositif 5 est utilisé pour lire et décoder un marquage 2 relatif à un patient identifié, et un autre marquage 2' relatif à une étude particulière. La lecture successive de ces deux marquages conduit directement à un questionnaire de l'étude en question pour le patient désigné, et non à un questionnaire général non relié à un patient en particulier.

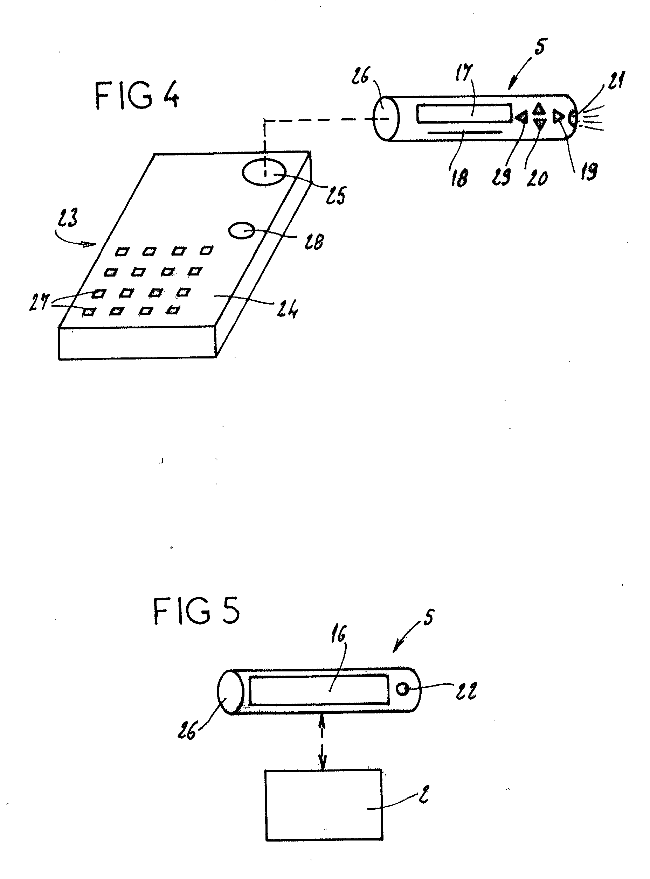

Les figures 4 et 5 représentent, à titre d'exemple, un mode de réalisation pratique du dispositif 5 de lecture et de décodage. De forme générale allongée dans l'exemple illustré au dessin, le dispositif 5, conçu comme un accessoire portable et facilement tenu à la main, avec source d'énergie autonome, possède sur un côté (voir figure 5) une zone 16 de lecture du marquage 2, par exemple par un procédé opto-électronique. Sur son côté opposé, et comme le montre la figure 4, le dispositif 5 comporte ici :
- un petit écran 17 pour l'affichage d'un texte bref, par exemple pour retranscrire des éléments du marquage 2 lu ;
- une fente 18 pour introduction et lecture de carte magnétique ou de carte à puce, contenant par exemple des instructions INS à pré-enregistrer ;
- une touche 29 de commande générale marche/arrêt ;
- une touche 19 de commande d'émission du signal S donnant ordre de rechercher l'information ;
- d'autres touches 20 permettant, par exemple, de faire défiler des informations sur l'écran 17 ;
- un émetteur 21, pour l'émission du signal S donnant ordre de rechercher l'information, en réponse à l'actionnement de la touche 19.

A cet égard, on notera que le dispositif 5 de lecture et de décodage des marquages 2 est avantageusement relié au terminal 8 tel que micro-ordinateur, pour la transmission du signal S, notamment par une liaison sans fil, telle que liaison radio ou infrarouge, l'émetteur 21 étant ainsi un émetteur radio ou infrarouge adapté.

Comme le montre la figure 5, le dispositif 5 peut encore comporter un récepteur de signaux 22, tel qu'un récepteur radio ou infrarouge, lui permettant notamment de recevoir (et par conséquent de retransmettre) un signal émis par un autre dispositif 5 du même type.

En se référant de nouveau à la figure 4, le dispositif 5 de lecture et de décodage des marquages 2 est ici associé à un socle support 23, sur lequel il peut être placé pour être rechargé en énergie, et/ou chargé en instructions INS. La face supérieure 24 du socle suppport 23 comporte un emplacement 25, sur lequel le dispositif 5 est posé et maintenu par l'une de ses faces terminales 26, constituant une face de charge avec contacts électriques adaptés. La face supérieure 24 du socle-support 23 comporte encore, dans l'exemple illustré, un clavier alpha-numérique 27 permettant d'introduire des instructions INS destinées à être chargées dans le dispositif 5, et une ou plusieurs touches 28 pour une mise au jour et à l'heure.

Le terminal 8, pouvant être un micro-ordinateur du commerce, du type "PC", ne sera pas décrit ici en détail. Comme déjà indiqué plus haut, ce terminal 8 doit être pourvu d'une fonction 9 de réception du signal S émis par le dispositif 5. C'est aussi d'une manière connue en soi que ce terminal 8 va rechercher l'information INF sur le réseau, puis la récupérer et l'afficher. Le terminal 8 peut recevoir un logiciel adapté, ou être doté d'une touche ou autre commande spécifique, pour accéder au réseau 10 dès qu'il a reçu le signal S émis par le dispositif 5 de lecture et de décodage des marquages 2. Dans le cas où le dispositif 5 est partie intégrante d'un téléphone avec accès au réseau Internet (le téléphone constituant alors le terminal 8), il va de soi que le lien est directement assuré entre le dispositif 5 et ledit téléphone pour accéder au réseau Internet.

Comme on le conçoit aisément, le procédé et le matériel, précédemment décrits, peuvent posséder des applications tant individuelles et privées, que collectives et/ou professionnelles, selon les types d'informations et d'utilisateurs impliqués, ce procédé et le matériel pour sa mise en oeuvre ayant un caractère polyvalent. A titre d'illustration de l'utilisation pratique et de l'intérêt du procédé et du matériel, objet de l'invention, on donne ci-après deux exemples concrets, évidemment non limitatifs :

Le premier exemple concerne un médecin, disposant d'un dispositif 5 de lecture et de décodage, et d'un micro-ordinateur 8 équipé pour recevoir et décoder le signal S issu du dispositif 5.

L'application du procédé faite par le médecin consiste à l'utiliser dans le cadre de l'expérimentation d'un nouveau médicament à laquelle il participe pour le compte d'un laboratoire pharmaceutique. Le médecin doit suivre un malade qui reçoit ce médicament pendant deux ans et ce au cours de huit visites trimestrielles. Chaque trimestre il doit compléter un questionnaire spécifique qui est mis à sa disposition sur un site Internet réservé à l'expérimentation en cause. Naturellement, ce site est strictement réservé aux médecins participant à cette expérimentation, et chaque série de huit questionnaires est elle-même strictement réservée au seul médecin désigné pour suivre le patient correspondant à cette série de questionnaires.

Sur une feuille à disposition du médecin figurent les huit trimestres de suivi du malade et pour chacun d'eux correspondent deux marquages, l'un de type A réfère au questionnaire à compléter ce trimestre là, l'autre de type B réfère au malade concerné et à des recommandations particulières rappelées au médecin (par exemple des informations qu'il ne doit pas oublier de donner au patient). Chacun des marquages A et B contient une spécificité complémentaire SPE de "personnalisation". Lors de la première consultation, le médecin lit et décode le premier marquage A puis le second marquage B, grâce au dispositif 5.

Le médecin utilise ainsi son dispositif 5 qui d'une part contient effectivement en instruction INS son code d'identification de médecin, et qui d'autre part assemble les codes DES respectivement inscrits sur le marquage A et le marquage B. Le dispositif émet alors le signal S. Ce dernier va transmettre le code d'identification du médecin, lequel autorisera l'accès à l'information recherchée sur le réseau, puis le signal S va permettre de rechercher à l'aide du micro-ordinateur du médecin le questionnaire correspondant au premier trimestre (code DES du marquage A) et à un patient bien déterminé (code DES du marquage B).

Par la suite, le médecin opère de façon similaire pour chaque consultation trimestrielle. Il peut également revenir sur le questionnaire d'une consultation antérieure pour y apporter une précision complémentaire ou revoir une de ses réponses ; pour cela il lit à nouveau le marquage correspondant à cette consultation antérieure.

Le second exemple concerne une utilisatrice équipée d'un téléphone avec accès à Internet, les pages sélectionnées apparaissant sur l'écran du téléphone (par exemple de technologie dite UMTS). Le dispositif 5 de lecture et de décodage fait partie intégrante de ce téléphone, lequel dispose donc, en combinaison :
- de la fonction de lecture et décodage d'un marquage, avec la description DES et les éventuelles spécificités complémentaires SPE que le marquage peut contenir ;
- d'éventuelles instructions INS ;
- de la fonction d'analyse de corrélation entre spécificités complémentaires SPE et instructions INS pré-enregistrées ;
- de la fontion d'émission et réception du signal S, fonction qui agit sur le téléphone qui intervient alors, lui-même, comme terminal d'accès du réseau Internet.

Dans cet exemple, la propriétaire du téléphone a accepté de faire figurer en instructions INS qu'elle est du sexe féminin, cadre supérieur, cliente "N" d'une société européenne de vente par correspondance et parlant préférentiellement le français.

Dans le magazine féminin anglais "MAG" une photographie décrit l'aménagement d'un salon et il est possible d'obtenir plus d'informations sur un canapé présenté sur le site Internet du fabricant "FAB.com". Pour y accéder la lectrice devrait, par la voie traditionnelle, se connecter sur Internet puis taper la séquence complète de chiffres, lettres et signes divers pour accéder à une page consacrée aux canapés. Là, elle va devoir effectuer des choix complémentaires pour accéder au canapé qu'elle recherche.

Avec le système de marquage selon l'invention, le magazine "MAG" permet à ses lectrices d'accéder directement à la page réservée au canapé recherché. En l'espèce, ce marquage ne prévoit aucune limite d'accès, mais il demande à ce que le signal S intègre les instructions INS du dispositif 5, et il permet un choix de langue entre anglais, allemand, espagnol et français.

L'utilisatrice lit et décode ce marquage grâce au dispositif 5 contenu dans son téléphone portable à la norme UMTS. Le dispositif 5 émet sans réserve le signal S qui est compris par son téléphone agissant comme terminal d'accès à Internet. Le signal S transmet également les instructions INS concernant cette utilisatrice et indique sa langue préférentielle, en l'occurrence le français. L'utilisatrice accède à l'information INF relative au canapé qu'elle recherche et qui apparaît sur l'écran de son téléphone. Cette information est en français. Elle peut ensuite décider de commander le canapé à la société de vente par correspondance qui l'identifiera par son numéro de cliente transmis entre autre information par le signal S. De leur côté, le fabricant "FAB" et la société de vente par correspondance connaîtront la source du contact commercial, en l'occurrence le magazine "MAG" qui pourra se prévaloir ensuite de la qualité de son lectorat.

Dans une autre situation cette utilisatrice aurait pu différer sa recherche d'information sur Internet. Son dispositif 5 permettant de stocker le contenu du marquage, elle l'enregistre. Le marquage contient lui-même un code indiquant que dans ce cas il est identifié par le message "MAG- canapé FAB". A posteriori elle peut donc retrouver le marquage relevé dans le magazine "MAG" et accéder alors à l'information correspondante sur Internet. L'on ne s'éloignerait pas du cadre de l'invention, telle que définie dans les revendications annexées :
- en utilisant des marquages de tous types : optiques, magnétiques, électro-magnétiques, etc... , en combinaison avec des moyens de lecture adaptés à ces divers types de marquage ;
- en donnant au dispositif de lecture et de décodage toute configuration adaptée, le cas échéant en intégrant ce dispositif à un autre appareil portable, tel que téléphone mobile ou assistant personnel (en particulier, si le dispositif est intégré à un téléphone permettant d'accéder au réseau d'lnternet, il va de soi que le lien est automatiquement assuré entre ce dispositif et le téléphone pour accéder au réseau Internet) ;
- en remplaçant le micro-ordinateur par tout terminal équivalent, raccordé ou raccordable au réseau sur lequel doit être recherchée l'information, en particulier un téléphone qui permet d'accéder au réseau Internet (comme il ressort déjà de ce qui précède);
- en apposant les marquages sur tous genres de documents, tels que magazines ou notices, ou sur des objets ou appareils, ou encore sur leurs emballages ;
- en donnant accès à tous genres d'informations, disponibles sur tout type de réseau, ces informations pouvant être des documentations publicitaires, commerciales ou techniques, ou des documents administratifs, y compris des formulaires.

## Revendications

1. Procédé pour l'accès à des informations (INF) disponibles sur un réseau (10) du genre Internet ou Intranet, **caractérisé en ce qu'**il consiste essentiellement :
- à créer, et mettre à disposition de l'utilisateur, au moins un marquage (2, 3) apposé sur un document ou un objet (4), le marquage (2, 3) contenant au moins un code (DES) correspondant à une séquence de lettres, chiffres et/ou signes, nécessaire pour accéder à une information (INF) déterminée, disponible sur le réseau (10) ;
- à lire et décoder le contenu du marquage (2, 3) précité, par des moyens (5) de lecture et de décodage ;
- à émettre, à partir de ces moyens (5), un signal (S) pour rechercher l'information (INF) concernée sur le réseau (10), ledit signal (S) correspondant à la même séquence de lettres, chiffres et signes ; et
- en réponse à la réception de ce signal (S), à rechercher et obtenir l'information (INF) sur le réseau (10).

2. Procédé selon la revendication 1, **caractérisé en ce que** le marquage (2, 3) contient uniquement le code (DES) d'identification de l'information (INF) correspondante, et **en ce que** les moyens (5) de lecture et de décodage ne font que lire et décoder le contenu du marquage (2, 3), pour émettre dans tous les cas, et sans sélection, le signal (S) pour rechercher cette information (INF).

3. Procédé selon la revendication 1, **caractérisé en ce que** :
- des spécificités complémentaires (SPE) sont incluses dans le marquage (2, 3, 13), sous forme codée ;
- lesdites spécificités complémentaires (SPE) sont aussi lues et décodées par les moyens (5) de lecture et de décodage ; et
- soit les spécificités complémentaires (SPE) sont corrélées, par les moyens (5) de lecture et de décodage eux-mêmes, à des instructions (INS) préalablement enregistrées dans ces moyens (5), de manière que ceux-ci autorisent ou interdisent, selon la corrélation constatée, l'émission du signal (S) pour rechercher l'information (INF) ;
- soit les spécificités complémentaires (SPE) sont transmises par les moyens (5) de lecture et de décodage, avec le signal (S) pour rechercher l'information (INF), auquel cas la corrélation est effectuée par les moyens (8), tels que micro-ordinateur, recevant ledit signal (S) et allant rechercher l'information (INF) sur le réseau (10).

4. Procédé selon la revendication 3, **caractérisé en ce que** les spécificités complémentaires (SPE) sont choisies parmi les spécificités : image, date, âge, personnalisation, liaison entre plusieurs marquages, langue, éditeur, accès protégé, message ou profil utilisateur.

5. Procédé selon l'une quelconque des revendications 1 à 4, **caractérisé en ce qu'**au moins deux marquages distincts et complémentaires (2, 2') sont lus et combinés, pour accéder à une information (INF) particulière.

6. Matériel pour l'accès à des informations sur un réseau, mettant en oeuvre le procédé selon l'une quelconque des revendications 1 à 5, **caractérisé en ce qu'**il se compose :
- de supports (4) tels que documents ou objets, ou leurs emballages, portant chacun au moins un marquage (2, 3) contenant au moins un code (DES) nécessaire pour accéder à une information (INF) déterminée, disponible sur le réseau (10) ;
- un dispositif (5) de lecture et de décodage, avec moyens (6, 16) de lecture d'un marquage, moyens (6) de décodage du marquage lu, et moyens (7, 21) d'émission d'un signal (S) pour rechercher l'information (INF) concernée ; et
- un terminal (8) tel que micro-ordinateur, équipé de moyens (9) de réception du signal (S) précité, ce terminal (8) étant raccordé ou raccordable au réseau (10), et étant prévu pour rechercher et obtenir l'information (INF) sur le réseau (10).

7. Matériel selon la revendication 6, **caractérisé en ce que** le dispositif (5) de lecture et de décodage des marquages (2, 3) est un dispositif électronique, ou opto-électronique, de préférence portable.

8. Matériel selon la revendication 6 ou 7, **caractérisé en ce que** le dispositif (5) de lecture et de décodage des marquages (2, 3) est conçu comme partie intégrante d'un autre appareil, tel qu'un téléphone mobile ou un assistant personnel, de manière à profiter des fonctions de cet appareil, et/ou est en relation avec un tel appareil.

9. Matériel selon la revendication 8, **caractérisé en ce que** le téléphone, intégrant le dispositif (5) de lecture et de décodage des marquages (2, 3), est un téléphone avec accès au réseau Internet (10), jouant lui-même le rôle du terminal (8).

10. Matériel selon l'une quelconque des revendications 6 à 9, **caractérisé en ce que** le dispositif (5) de lecture et de décodage des marquages (2, 3) possède des moyens d'affichage, tels qu'un petit écran (17).

11. Matériel selon l'une quelconque des revendications 6 à 10, **caractérisé en ce que** le dispositif (5) de lecture et de décodage des marquages (2, 3) inclut des moyens (14) de stockage de données, permettant de mémoriser l'équivalent de plusieurs marquages (2, 3) lus, et/ou des instructions (INS).

12. Matériel selon la revendication 11, **caractérisé en ce que** le dispositif (5) de lecture et de décodage des marquages (2, 3) inclut des moyens d'analyse de corrélation (15), pour corréler des spécificités complémentaires (SPE) lues à des instructions (INS) pré-enregistrées dans les moyens (14) de stockage du même dispositif (5).

13. Matériel selon l'une quelconque des revendications 6 à 12, **caractérisé en ce qu'**il comprend encore un socle support (23), sur lequel le dispositif (5) de lecture et de décodage des marquages (2, 3) peut être posé et rechargé en énergie et/ou chargé en instructions (INS).

14. Matériel selon la revendication 13, **caractérisé en ce que** le socle support (23) est pourvu, outre ses moyens (25) de tenue mécanique du dispositif (5) de lecture et de décodage des marquages (2, 3), et de liaison électrique avec ce dispositif (5), de touches alphanumériques (27), afin de charger des instructions (INS) à transmettre au dispositif (5) de lecture et de décodage des marquages (2, 3).

15. Matériel selon l'une quelconque des revendications 6 à 14, **caractérisé en ce que** le dispositif (5) de lecture et de décodage des marquages (2, 3) est doté de touches (19, 20, 29) de commande de fonctions, telles que des touches pour la mise en marche et à l'arrêt du dispositif (5), pour émettre le signal (S) pour rechercher l'information (INF), pour introduire un code d'accès et/ou pour faire défiler des informations sur l'écran, dans le cas d'un dispositif pourvu d'un écran (17).

16. Matériel selon l'une quelconque des revendications 6 à 15, **caractérisé en ce que** le dispositif (5) de lecture et de décodage des marquages (2, 3) est doté d'une fente (18) pour introduction et lecture de carte magnétique ou carte à puce, contenant par exemple des instructions (INS) à pré-enregistrer dans ce dispositif (5).

17. Matériel selon l'une quelconque des revendications 6 à 16, **caractérisé en ce que** le dispositif (5) de lecture et de décodage des marquages comporte des moyens (22) de réception de signaux, lui permettant de recevoir des signaux émis par un autre dispositif (5) du même type, et/ou de recevoir un signal en provenance d'une autre source, émettant l'équivalent "électronique" d'un marquage (2, 3) sur papier ou objet (4).

18. Matériel selon l'une quelconque des revendications 6 à 17, **caractérisé en ce que** le dispositif (5) de lecture et de décodage des marquages (2, 3) est relié au terminal (8) tel que micro-ordinateur ou téléphone, pour la transmission du signal (S) pour rechercher l'information (INF), par une liaison sans fil, telle que liaison radio ou infrarouge.

19. Matériel selon l'une quelconque des revendications 6 à 18, **caractérisé en ce que** le terminal (8), tel que micro-ordinateur, recevant le signal (S) émis par le dispositif (5) de lecture et de décodage des marquages (2, 3), est préconditionné pour interpréter ledit signal (S).

20. Matériel selon la revendication 19, **caractérisé en ce que** le mircro-ordinateur (8) est doté, sur son clavier ou sa souris ou tout autre périphérique, d'une touche spécifique commandant la liaison entre le dispositif (5) de lecture et de décodage des marquages (2, 3) et le micro-ordinateur (8), et entre ce micro-ordinateur (8) et le réseau (10).
